Europäisches Patentamt

European Patent Office

Office européen des brevets

(11) Numéro de publication : **0 156 675**
**B1**

(12) **FASCICULE DE BREVET EUROPÉEN**

(45) Date de publication du fascicule du brevet :
23.12.87

(51) Int. Cl.⁴ : **G 06 F 13/40**

(21) Numéro de dépôt : 85400296.1

(22) Date de dépôt : **19.02.85**

(54) **Circuit de précharge de bus de transfert de données logiques.**

(30) Priorité : 24.02.84 FR 8402855

(43) Date de publication de la demande :
02.10.85 Bulletin 85/40

(45) Mention de la délivrance du brevet :
23.12.87 Bulletin 87/52

(84) Etats contractants désignés :
DE FR GB IT NL

(56) Documents cités :
EP-A- 0 082 980
DE-A- 3 133 579
DE-A- 3 228 013

(73) Titulaire : **THOMSON SEMICONDUCTEURS**
**101, bld Murat**
**F-75016 - Paris (FR)**

(72) Inventeur : **Tallaron, Louis**
**THOMSON-CSF SCPI 173, bld Haussmann**
**F-75379 Paris Cedex 08 (FR)**

(74) Mandataire : **Guérin, Michel et al**
**THOMSON-CSF SCPI 19, avenue de Messine**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

Le transfert de données sur un bus reliant un organe d'émission de données à un organe de réception se fait généralement, dans les circuits de traitement de signaux logiques devant fonctionner à grande vitesse, en deux phases à chaque cycle d'émission-réception : dans une première phase les données sont préparées par l'organe d'émission, tandis que l'organe de réception se prépare à recevoir de nouvelles données ; dans une deuxième phase, les données sont effectivement appliquées au bus par un étage d'attaque et sont reçues par l'organe de réception.

Les données sont des signaux logiques de niveau « 0 » ou « 1 ». Le niveau 0 est théoriquement défini comme une tension de zéro volt et le niveau 1 comme une tension égale à la tension d'alimentation logique Vdd (5 volts environ). Mais pratiquement, en technologie NMOS (Métal-Oxyde-Semiconducteur à canal N) par exemple, le niveau 0 est une tension comprise entre 0 et une tension de seuil Vt des transistors MOS à canal N du circuit, et le niveau 1 peut être une tension comprise entre Vt et 5 volts.

Ils se trouve que dans la majorité des cas, notamment en technologie NMOS, la constitution des étages d'attaque du bus et de l'organe de réception de données est telle qu'il est beaucoup plus rapide de faire passer un conducteur du bus de l'état 1 à l'état 0 que de l'amener de l'état 0 à l'état 1.

C'est pourquoi, pour augmenter le débit de données sur le bus, on prévoit souvent qu'un circuit de précharge des conducteurs du bus place tous les conducteurs à un niveau de potentiel qui est juste suffisant pour définir l'état 1 ou pratiquement l'état 1, ceci pendant la première phase ou phase de préparation du transfert, car cette phase est de toute manière plus longue que la seconde phase (phase de transfert proprement dit) puisqu'elle correspond par exemple à l'exécution de calculs dont le résultat constitue les données à transmettre ; dans la deuxième phase (exécution du transfert), les conducteurs qui doivent passer à l'état 1 y sont déjà ou pratiquement déjà, ceux qui doivent passer à l'état zéro y sont mis rapidement. Ainsi, la deuxième phase du cycle peut avoir une durée minimale correspondant au temps nécessaire au passage d'un conducteur de l'état 1 à l'état zéro, et cette durée peut être très courte.

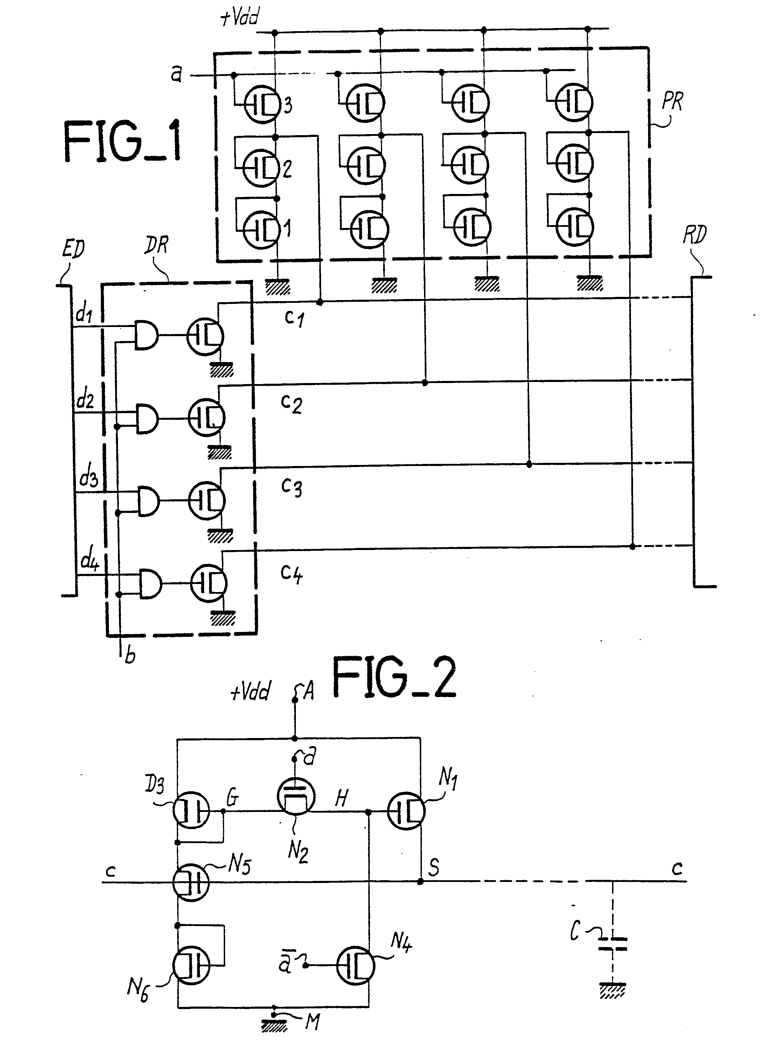

La figure 1 montre l'organisation d'un système de transfert de données avec précharge : l'organe d'émission de données est désigné par ED et fournit des données d1, d2, d3, d4 destinées à être transférées respectivement sur les conducteurs c1, c2, c3, c4 d'un bus de transfert de données, pour être transmises à un organe de réception de données RD.

Un étage d'attaque du bus, DR, est interposé entre les sorties de données de l'organe d'émission ED et les conducteurs du bus. Cet étage d'attaque comprend par exemple, pour chaque conducteur, une porte ET recevant une sortie de donnée et un signal de commande de transfert, et un transistor MOS commandé par cette porte et susceptible de relier le conducteur correspondant à la masse ou de l'en isoler selon l'état de la sortie de la porte ET.

Le signal de commande de transfert est au niveau logique 1 pendant la phase de transfert b (deuxième phase) de chaque cycle de transmission de donnée.

Enfin, un circuit de précharge PR, commandé par un signal de commande de précharge, au niveau 1 pendant la phase de précharge a (première phase) de chaque cycle, permet de précharger chaque conducteur du bus au voisinage de l'état logique 1. La phase a et la phase b sont disjointes ou exactement complémentaires.

Dans un exemple de réalisation de la technique antérieure représenté à la figure 1, le circuit de précharge comprend, pour chaque conducteur du bus à précharger, trois transistors MOS à canal N en série entre la masse et une tension d'alimentation générale positive Vdd. Le conducteur à précharger est relié entre le deuxième et le troisième transistor (ce dernier étant relié par ailleurs à Vdd et recevant sur sa grille le signal de commande de précharge a) ; les premier et deuxième transistors ont leur grille reliée à leur drain.

Dans cette réalisation, dès le début de la phase de précharge a, le troisième transistor se met à conduire et à charger la capacité (parasite ou non) présentée par le conducteur qui est statiquement en état de haute impédance à son entrée comme à sa sortie. Le troisième transistor doit de préférence, pour que la charge soit rapide, c'est-à-dire pour que le conducteur atteigne rapidement une tension de précharge désirée, être de dimension relativement importante. Lorsque la tension sur le conducteur atteint 2 Vt (somme des tensions de seuil des premier et deuxième transistors, ceux-ci se mettent à conduire et stabilisent à 2 Vt la tension de précharge sur le conducteur du bus. A partir de 1a, la précharge est terminée.

Après la fin de la phase a, le troisième transistor se bloque, les conducteurs du bus restent préchargés. Lors de la phase b, les données sont appliquées par l'étage d'attaque.

Le principal inconvénient de ce circuit de précharge est le fait qu'entre le moment où le conducteur du bus atteint la tension de précharge fixée (2 Vt dans l'exemple représenté, mais cela pourrait être une autre valeur, Vt ou 3 Vt etc...), et la fin de la phase de précharge a, une forte consommation de courant a lieu puisque les trois transistors sont conducteurs. Si le conducteur de bus était déjà au niveau 1, cette consommation a lieu pendant toute la phase de précharge. Pour un bus de 32 conducteurs cela ferait 32 groupes de transistors conducteurs simultanément, d'où une consommation de puissance qui peut être très importante alors qu'on cherche en général par tous les moyens à réduire la consommation des circuits.

La présente invention propose un nouveau circuit de précharge qui minimise la consommation de puissance pendant la phase de précharge.

Ce circuit comporte, pour chaque conducteur à précharger, deux bornes d'alimentation, une borne de sortie destinée à être reliée au conducteur du bus à précharger, une entrée de commande de précharge, et une entrée d'inhibition de précharge.

Selon l'invention, le circuit est constitué comme suit : un premier transistor est connecté entre une première borne d'alimentation et la borne de sortie ; un deuxième transistor est connecté entre la grille du premier transistor et la source d'un troisième transistor et a sa grille commandée par l'entrée de commande de précharge, le troisième transistor étant relié à la première borne d'alimentation ; un quatrième transistor est connecté entre la grille du premier transistor et la deuxième borne d'alimentation et a sa grille connectée à l'entrée d'inhibition de précharge ; au moins un cinquième transistor est connecté en série entre la source du troisième transistor et la deuxième borne d'alimentation, avec la grille de ce cinquième transistor connectée à la borne de sortie.

De préférence, un sixième transistor est connecté en série entre le cinquième et la borne d'alimentation, ce sixième transistor ayant son drain relié à sa grille.

Le troisième transistor est de préférence un transistor à déplétion (tension de seuil négative) ayant sa grille reliée à sa source.

D'autres caractéristiques et avantages de l'invention apparaîtront à la lecture de la description détaillée qui suit et qui est faite en référence au dessin annexé dans lequel :

la figure 1, déjà décrite, représente un système de transfert de données de la technique antérieure,

la figure 2 représente un circuit de précharge selon l'invention, pour un conducteur de bus unique.

Le circuit de la figure 2 est destiné à être substitué à chacun des groupes de trois transistors de précharge de la figure 1.

Il comprend les éléments définis ci-dessus, dans lesquels les transistors sont des transistors MOS à canal N (car le circuit est particulièrement adapté à une technologie NMOS) désignés respectivement par N1, N2, D3, N4, N5, N6, pour les premier, deuxième, troisième, quatrième, cinquième, sixième transistors. Le transistor D3 est un transistor déplété : tension de seuil négative, alors que les transistors N1, N2, N4, N5, N6 sont des transistors « normaux » à tension de seuil Vt positive, la même pour tous ces transistors formés simultanément sur une même pastille de circuit intégré contenant le bus à précharger.

Les bornes d'alimentation du circuit sont désignées par A (tension Vdd positive) et M (masse à potentiel de référence nul).

L'entrée de commande de précharge est désignée par a, comme la phase de précharge a pendant laquelle cette entrée est portée à un niveau logique 1.

L'entrée d'inhibition de précharge est désignée ici par ā et reçoit en principe un signal complémentaire du signal de commande de précharge, mais il faut comprendre que cette entrée peut recevoir aussi un signal différent pourvu qu'il soit disjoint d'avec la phase de précharge a. Par exemple, l'entrée d'inhibition ā pourrait recevoir le signal de commande de transfert de données b mentionné à propos de la figure 1.

Enfin, la sortie du circuit est désigné par S et est raccordée au conducteur c à précharger.

Le conducteur c a été représenté avec une capacité parallèle équivalente C (en pointillés) qui représente sa capacité propre et celle des organes non représentés auxquels il est raccordé (par exemple des grilles de transistors MOS de l'organe de réception de données de la figure 1).

Le fonctionnement du circuit est le suivant : au début de la phase de précharge a, le transistor N2 devient conducteur alors que le transistor déplété D3 est naturellement conducteur en permanence. Ceci rend conducteur le transistor N1 et le potentiel du conducteur, de bus c monte du fait d'une charge progressive de sa capacité équivalente C.

Tant que le potentiel du conducteur c reste inférieur à la somme des tensions de seuil des transistors N5 et N6, ces deux transistors ne peuvent pas conduire.

Lorsque le potentiel du conducteur de bus C atteint la tension 2 Vt, N5 et N6 deviennent conducteurs et stabilisent le potentiel du conducteur c à cette valeur de précharge 2 Vt. Dès lors, si on appelle G le nœud de liaison de la source du transistor D3 et de la source du transistor N2, et H le nœud de liaison du drain du transistor N2 et de la grille du transistor N1, le nœud G passe pratiquement au potentiel 2 Vt, le nœud H suit cette valeur (N2 est conducteur) et le transistor N1 se bloque puisque sa tension de grille ne dépasse pratiquement plus sa tension de source.

Il n'y a plus de consommation de courant dans le transistor N1 mais au pire seulement dans la branche D3, N5, N6 qui ne comporte que des transistors de très petites dimensions, consommant peu et d'ailleurs à peine rendus conducteurs par la tension 2 Vt sur le conducteur c, alors que le transistor N1 doit être dimensionné largement et fortement rendu conducteur pour l'obtention d'une précharge rapide.

A la fin de la phase de précharge a, le transistor N2 se bloque (disparition du signal de commande de précharge sur sa grille) et le transistor N1 reste bloqué.

Dans la phase complémentaire qui suit (ā ou b), le transistor N4 est rendu conducteur pour assurer en tout état de cause le blocage du transistor N1 même si le conducteur de bus c est forcé à zéro par l'étage d'attaque. qui lui applique une donnée à transmettre.

Avec ce circuit, on consomme donc pratiquement exactement la puissance strictement nécessaire pour précharger le conducteur de bus, quelle que soit sa capacité équivalente ou son état préalable (un conducteur c déjà à l'état 1 ne provoque pas de consommation).

Le choix de la tension 2 Vt comme tension de précharge peut être modifié en modifiant la disposition de la branche N5, N6 : si seul N5 était présent la tension de précharge serait Vt. Avec un autre transistor monté comme N5 et inséré entre N5 et N6, la tension serait 3 Vt etc... Le choix de transistors à tensions de seuil différentes module encore les possibilités de choix de la tension de précharge.

## Revendications

1. Circuit de précharge d'un conducteur de bus de transfert de données logiques, comportant deux bornes d'alimentation (A, M), une borne de sortie (S) destinée à être reliée au conducteur du bus (c), une entrée de commande de précharge (a) et une entrée d'inhibition de précharge (ā), caractérisé en ce qu'il comporte un premier transistor (N1) connecté entre une première borne d'alimentation (A) et la borne de sortie (S), un deuxième transistor (N2) connecté entre la grille du premier transistor et la source d'un troisième transistor (D3) et ayant sa grille commandée par l'entrée de commande de précharge (a), le troisième transistor étant relié à la première borne d'alimentation, un quatrième transistor (N4) connecté entre la grille du premier transistor et la deuxième borne d'alimentation (M) et ayant sa grille commandée par l'entrée d'inhibition de précharge (ā) au moins un cinquième transistor (N5) connecté en série entre la source du troisième transistor et la deuxième borne d'alimentation (M) et ayant sa grille connectée à la borne de sortie (S).

2. Circuit de précharge selon la revendication 1, caractérisé en ce qu'il est prévu un sixième transistor (N6) connecté en série entre le cinquième et la deuxième borne d'alimentation et ayant son drain relié à sa grille.

3. Circuit de précharge selon la revendication 1, caractérisé en ce que le troisième transistor (D3) est un transistor à déplétion ayant sa grille reliée à sa source.

## Claims

1. A circuit for precharging a logic data transfer bus conductor, comprising two supply terminals (A, M), an output terminal (S) conceived to be connected to the bus conductor (c), a precharge control input (a) and a precharge inhibition input (a), characterized in that it comprises a first transistor (N1) inserted between a first supply terminal (A) and the output terminal (S), a second transistor (N2) connected on the one hand to the gate of the first transistor and on the other hand to the source and the gate of a third transistor (D3), its gate being controlled by the precharge control input (a), the third transistor being connected to the first supply terminal, a fourth transistor (N4) inserted between the gate of the first transistor and the second supply terminal (M), the gate of the fourth transistor being controlled by the precharge inhibition input (a), and at least a fifth transistor (N5) inserted in series between the source of the third transistor and the second supply terminal (M), whereas its gate is connected to the output terminal (S).

2. A precharge circuit according to claim 1, characterized in that a sixth transistor (N6) is provided which is inserted in series between the fifth transistor and the second supply terminal and the drain of which is connected to its gate.

3. A precharge circuit according to claim 1, characterized in that the third transistor (D3) is a depletion transistor.

## Patentansprüche

1. Schaltkreis zum Vor-Laden eines Leiters einer Transferschiene for logische Daten, mit zwei Versorgungsklemmen (A, M), einer Ausgangsklemme (S), die zum Anschluß an den Schienenleiter (c) bestimmt ist, einem Steuereingang (a) für die Vor-Ladung und einem Blockiereingang (a) zum Sperren der Vor-Ladung, dadurch gekennzeichnet, daß er aufweist : einen ersten Transistor (N1), der zwischen eine erste Versorgungsklemme (A) und die Ausgangsklemme (S) eingefügt ist, einen zweiten Transistor (N2), der einerseits an das Gate des ersten Transistors und andererseits an die Source und das Gate eines dritten Transistors (D3) angeschlossen ist und dessen Gate vom Steuereingang für die Vor-Ladung (a) gesteuert wird, wobei der dritte Transistor an die erste Versorgungsklemme angeschlossen ist, einen vierten Transistor (N4), der zwischen das Gate des ersten Transistors und die zweite Versorgungsklemme (M) eingefügt ist und dessen Gate vom Blockiereingang (a) zum Sperren der Vor-Ladung gesteuert wird, und mindestens einen fünften Transistor (N5), der in Reihe zwischen die Source des dritten Transistors und die zweite Versorgungsklemme (M) eingefügt ist und dessen Gate mit der Ausgangsklemme (S) verbunden ist.

2. Schaltkreis zum Vor-Laden nach Anspruch 1, dadurch gekennzeichnet, daß ein sechster Transistor (N6) vorgesehen ist, der in Reihe zwischen den fünften Transistor und die zweite Versorgungsklemme eingefügt ist und dessen Drain mit seinem Gate verbunden ist.

3. Schaltkreis zum Vor-Laden nach Anspruch 1, dadurch gekennzeichnet, daß der dritte Transistor (D3) ein Inverstransistor ist.

0 156 675

FIG_1

FIG_2